# FASCICULE DE BREVET EUROPEEN

(11) **EP 0 902 229 B1**
(45) Date de publication et mention de la délivrance du brevet: **26.02.2003**
(21) Numéro de dépôt: 98402231.9
(22) Date de dépôt: 10.09.1998
(51) Int. Cl.: F16L 41/06

(54) **Procédé et dispositif de mise en place d'une prise de branchement depuis le haut d'un puits de fouille**
Verfahren und Vorrichtung zum Positionieren eines unterirdischen Rohrabzweigungsstückes von der Oberfläche aus
Method and arrangement for positioning a branch pipe on an underground pipe from above the ground

(30) Priorité: 10.09.1997 FR 9711224
(43) Date de publication de la demande: 17.03.1999
(73) Titulaire: GAZ DE FRANCE, 75017 Paris (FR)
(72) Inventeur: Wartel, Christian, 75020 Paris (FR); Pfeiffer, Dominique, 60950 Ermenonville (FR); Le Cointe, Patrick, 95570 Bouffemont (FR)
(74) Mandataire: Thévenet, Jean-Bruno

(56) Documents cités:
- EP-A- 0 205 696
- FR-A- 2 714 710

## Description

La présente invention a pour objet un procédé et un dispositif de mise en place d'une prise de branchement sur une canalisation en matériau thermofusible enterrée de transport d'un fluide, depuis le haut d'un puits de fouille.

Il est souvent nécessaire de poser des prises de branchement ou de dérivation sur des canalisations, telles que des canalisations de distribution de gaz ou d'eau. En milieu urbain, on souhaite pouvoir réaliser un puits de fouille de dimensions limitées afin notamment de limiter la gêne causée à la circulation des piétons ou des véhicules. Il est donc exclu de réaliser une tranchée permettant à une personne de descendre au fond de celle-ci et les opérations de mise en place de la prise doivent pouvoir s'effectuer depuis le haut de puits de fouille.

Lorsque la canalisation et la prise de branchement sont réalisées en matière thermofusible, telle que du polyéthylène, la solidarisation de la prise sur la canalisation s'effectue généralement par soudage. Le corps de la prise de branchement, en forme de selle, est alors équipé d'une résistance électrique connectée entre deux plots d'alimentation de liaison à une source d'alimentation électrique pour effectuer l'opération de soudage par fusion de la semelle de la prise et son soudage sur la partie du tronçon de canalisation en contact avec cette semelle. Afin que l'opération de soudage s'effectue correctement, il est nécessaire que la prise de branchement soit maintenue serrée contre la canalisation. Pour cela, on prévoit une selle inférieure qui est disposée sous la canalisation et à laquelle est rattachée la selle supérieure du corps de la prise de branchement. La liaison entre le corps de la prise de branchement équipé des moyens de soudage et la selle inférieure permet d'assurer un serrage contre la canalisation dans des conditions bien définies et reproductibles, qui permettent ainsi d'obtenir des ensembles prise de branchement-selle inférieure homologués.

On a déjà proposé, notamment dans les documents FR-A-2 714 710 et EP-A-0 205 696, des appareillages permettant de procéder à la mise en place d'une prise de branchement en forme de selle sur une canalisation, depuis la partie supérieure d'un puits de fouille creusé autour de la zone d'installation de la prise, de sorte que l'on a pu réduire les dimensions du puits de fouille dès lors qu'il n'était plus nécessaire qu'une personne descende au fond de ce puits.

Les appareillages de l'art antérieur restent cependant d'une réalisation assez complexe et sont donc assez coûteux, et sont en outre monopolisés pendant toute l'opération de soudage, dès lors qu'ils contribuent à exercer une action de serrage sur la prise de branchement. L'utilisation de ces appareillages nécessite en outre divers essais pour s'assurer de la bonne qualité du soudage, qui est essentielle, notamment lorsqu'il s'agit de canalisations de distribution de gaz, afin d'éviter tout risque de fuite.

L'invention vise à remédier aux inconvénients précités et à permettre la mise en place d'une prise de branchement depuis le haut d'un puits de fouille de taille réduite, à un coût faible, sans qu'un appareillage spécialisé soit immobilisé pendant tout le temps de refroidissement de la prise après l'opération de soudage de celle-ci sur une canalisation, et sans qu'il soit nécessaire de procéder à des essais de soudage dans la mesure où des prises de branchement sont mises en place avec leur selle inférieure qui assure elle-même un serrage dans des conditions prédéterminées contre la canalisation.

L'invention a encore pour but de permettre la mise en place d'une prise de branchement à l'aide d'un matériel léger et peu encombrant, et n'impliquant pas d'opérations délicates lors de sa mise en oeuvre.

Ces buts sont atteints grâce à un procédé de mise en place d'une prise de branchement sur une canalisation enterrée de transport d'un fluide, depuis le haut d'un puits de fouille, caractérisé en ce qu'il comprend les étapes suivantes :
a) réaliser un puits de fouille de taille réduite de manière à dégager tout le pourtour du tronçon de canalisation sur lequel doit être installée la prise de branchement,
b) installer une selle inférieure séparable de la prise de branchement sur un adaptateur de selle inférieure lui-même monté sur un positionneur de selle inférieure muni de pinces adaptées au diamètre de la canalisation,
c) descendre le positionneur de selle inférieure dans le puits de fouille au moyen d'une canne universelle en prise avec le positionneur,
d) monter à l'aide des pinces le positionneur de selle inférieure sur le tronçon de canalisation dégagé,
e) désolidariser la canne universelle du positionneur et appuyer sur le positionneur de selle inférieure pour faire tourner ce dernier autour de la canalisation jusqu'à ce que la selle inférieure soit positionnée sous la canalisation,
f) monter le fût de la prise de branchement à l'extrémité de la canne universelle et descendre la prise de branchement jusqu'au niveau de la canalisation,
g) mettre en place et fixer la prise de branchement sur la selle inférieure à l'aide d'un embout tournevis fixé à l'extrémité de la canne universelle,
h) déconnecter à l'aide d'un outil à bras monté sur la canne universelle le positionneur de selle inférieure en laissant en place la selle inférieure,
i) remonter le positionneur de selle inférieure hors du puits de fouille, et
j) procéder aux opérations de soudage de la prise de branchement, de perçage de la prise de branchement et de mise en place d'un bouchon sur le fût de la prise.

L'invention concerne également un dispositif de mise en place d'une prise de branchement sur une canalisation enterrée de transport d'un fluide, depuis le haut d'un puits de fouille, à l'aide d'une canne universelle, caractérisé en ce qu'il comprend un positionneur de selle inférieure comportant un bâti sur lequel sont disposés, d'une part, des moyens de liaison par pincement adaptés au diamètre de la canalisation et un adaptateur de support de la selle inférieure et, d'autre part, un moyen de fixation amovible à l'extrémité de la canne universelle, situé du côté opposé aux moyens de liaison par pincement par rapport au bâti, et des moyens amovibles adaptables à l'extrémité de la canne universelle pour mettre en place la prise de branchement sur la canalisation au-dessus de la selle inférieure, effectuer une liaison mécanique entre la prise de branchement et la selle inférieure, déconnecter de la canalisation et faire basculer le positionneur de selle inférieure, et assurer les opérations de soudage de la prise de branchement sur la canalisation, de perçage du fût de la prise de branchement et de mise en place d'un bouchon sur ledit fût.

Selon un mode particulier de réalisation, le bâti du positionneur de selle inférieure comprend une barre horizontale parallèle au tronçon de canalisation et deux barres transversales fixées sur la barre horizontale et situées de part et d'autre de l'adaptateur de selle inférieure et du moyen de fixation amovible à l'extrémité de la canne universelle.

Selon un caractéristique particulière, les moyens amovibles de déconnexion du positionneur de selle inférieure par rapport à la canalisation comprennent au moins deux tiges verticales reliées à un embout de fixation à l'extrémité de la canne universelle pour prendre appui chacune respectivement sur des extrémités des barres transversales situées de part et d'autre de la canalisation.

Selon une autre caractéristique particulière, les moyens amovibles pour effectuer une liaison mécanique entre la prise de branchement et la selle inférieure comprennent des moyens de vissage reliés à un embout de fixation à l'extrémité de la canne universelle.

Selon un mode particulier de réalisation, l'adaptateur de selle inférieure du type à sangle comprend un corps en forme d'arceau fixé sur le bâti du positionneur de selle inférieure du côté des moyens de liaison par pinces et des languettes élastiques fixées aux extrémités dudit corps en forme d'arceau.

Selon un autre mode particulier de réalisation, l'adaptateur de selle inférieure du type à glissière comprend des moyens de fixation amovible de la selle inférieure sur le bâti du positionneur de selle inférieure du côté des moyens de liaison par pinces .

Dans ce cas, la selle inférieure du type à glissière comprend de part et d'autre d'une partie centrale une glissière,fixe pour recevoir une première bride de la prise de branchement et une glissière rabattable dont une partie peut basculer et venir se rabattre contre une butée pour recouvrir une deuxième bride de la prise de branchement.

Selon encore un autre mode particulier de réalisation, l'adaptateur de selle inférieure du type rigide à vis comprend un ensemble de lamelles flexibles fixées sur le bâti du positionneur de selle inférieure du côté des moyens de liaison par pinces.

Dans ce cas, avantageusement la selle inférieure du type à vis comprend, de part et d'autre d'une partie centrale en forme de berceau, des brides horizontales percées de trous de passage de vis, et les moyens amovibles pour effectuer une liaison mécanique entre la prise de branchement et la selle inférieure comprennent en outre des moyens de positionnement reliés à un embout de fixation à l'extrémité de la canne universelle et comportant deux tiges de maintien en position des pénétrations dans deux des trous de passage de vis ménagés dans la prise de branchement et dans la selle inférieure pour assurer un maintien en position de la prise de branchement par rapport à la selle inférieure pendant le début de l'opération de vissage dans des trous de passage de vis laissés libres.

D'autres caractéristiques et avantages de l'invention ressortiront de la description suivante de modes particuliers de réalisation, donnés à titre d'exemples, en référence aux dessins annexés, sur lesquels:
- la figure 1 est une vue en perspective d'un premier mode de réalisation de l'invention, correspondant à une étape d'installation au-dessus d'une canalisation, d'un appareillage de positionnement d'une selle inférieure de prise de branchement,
- la figure 2 est une vue analogue à la figure 1, mais montrant une étape de mise en place sur la canalisation, de l'appareillage de positionnement de selle inférieure,
- la figure 3 est une vue analogue à la figure 1, en perspective montrant le positionneur de selle inférieure des figures 1 et 2 basculé sous la canalisation,
- la figure 4 est une vue en perspective montrant l'installation d'une prise de branchement sur la selle inférieure de la figure 3 maintenue par un positionneur de selle inférieure,
- la figure 5 est une vue en perspective analogue à celle de la figure 4 mais montrant la fixation de la prise de branchement sur la selle inférieure,
- la figure 6 est une vue en perspective analogue à celle de la figure 5 mais montrant la mise en place d'un outil de déconnexion du positionneur de selle inférieure,
- la figure 7 est une vue en perspective du positionneur de selle inférieure utilisé dans le mode de réalisation des figures 1 à 6, une selle inférieure du type à sangle étant installée dans le positionneur de selle inférieure,
- la figure 8 est une vue analogue à celle de la figure 7, mais dans laquelle une selle inférieure rigide à visser est installée dans le positionneur de selle inférieure,
- la figure 9 est une vue analogue à celle de la figure 1, mais montrant une étape de présentation générale, au-dessus d'une canalisation d'un positionneur de selle inférieure équipé d'une selle inférieure rigide à visser telle que celle de la figure 8,
- la figure 10 est une vue en perspective montrant la présentation d'une prise de branchement sur la selle inférieure des figures 8 et 9 maintenue par un positionneur de selle inférieure ;
- la figure 11 est une vue en perspective montrant une opération de vissage d'une prise de branchement adaptée à une selle inférieure rigide à visser telle que celle des figures 8 à 10,
- la figure 12 est une vue en perspective d'un positionneur de selle inférieure selon un autre mode de réalisation associé à une selle inférieure du type à glissières,
- la figure 13 est une vue en perspective analogue à celle de la figure 1, mais correspondant au mode de réalisation de la figure 12 et illustre une étape d'installation au-dessus d'une canalisation, d'un positionneur de selle inférieure du type à glissières,
- la figure 14 est une vue en perspective montrant la présentation d'une prise de branchement sur un tronçon de canalisation équipé du positionneur de selle inférieure des figures 12 et 13,
- la figure 15 est une vue en perspective correspondant à une étape suivant celle de la figure 14 et montrant la mise en place et le serrage de la prise de branchement dans la selle inférieure maintenue en place par le positionneur de selle inférieure,
- la figure 16 est une vue en perspective illustrant une étape suivant celle de la figure 15 et montrant le démontage du positionneur de selle inférieure, la selle inférieure restant en place pour maintenir la prise de branchement pendant l'opération de soudage, et
- la figure 17 est une vue en perspective montrant l'opération de démontage de la selle inférieure après l'opération de soudage.

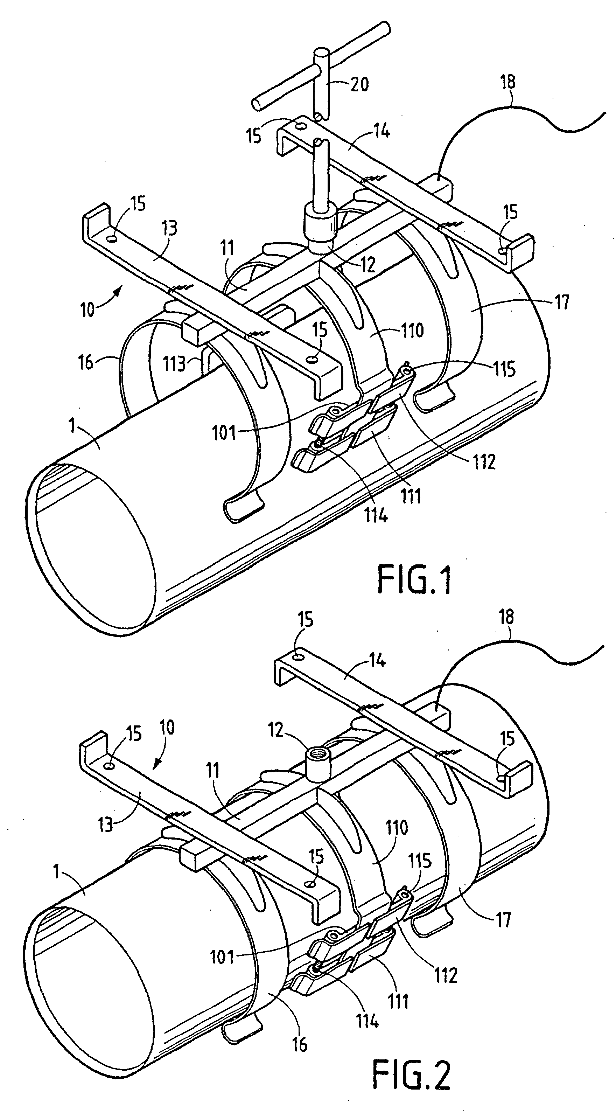

Le procédé et l'appareillage selon l'invention seront d'abord décrits selon un premier mode de réalisation en référence aux figures 1 à 7.

Une fois qu'un puits de fouille de taille réduite, par exemple d'une section de 0,40 m × 0,40 m, a été réalisé de manière à dégager un tronçon de canalisation 1 sur lequel doit être installée une prise de branchement ou de dérivation associée à une selle inférieure 100, la selle inférieure 100 est montée sur un positionneur 10 de selle inférieure.

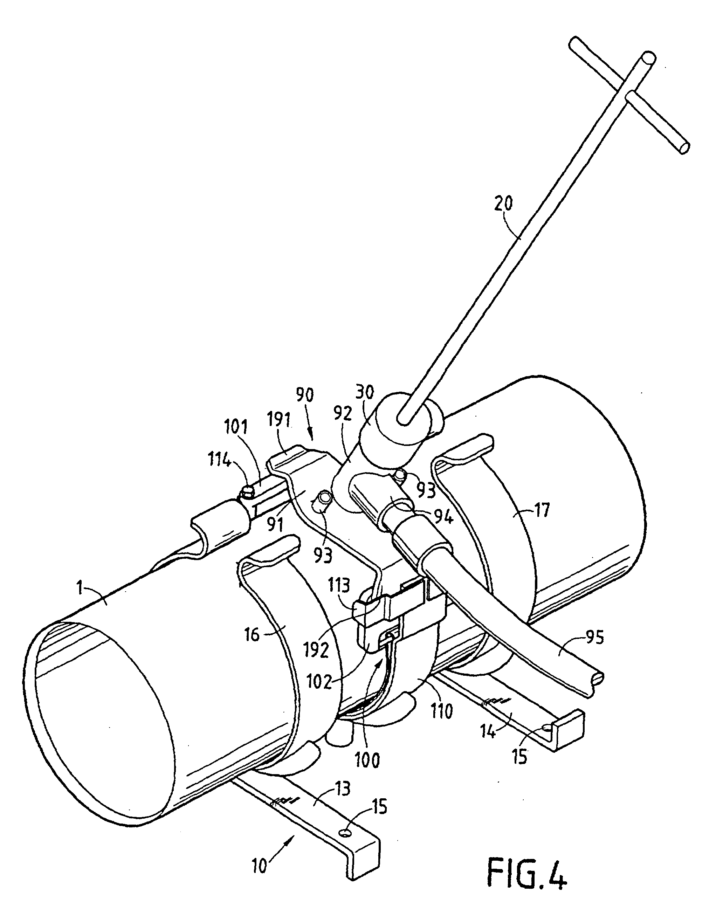

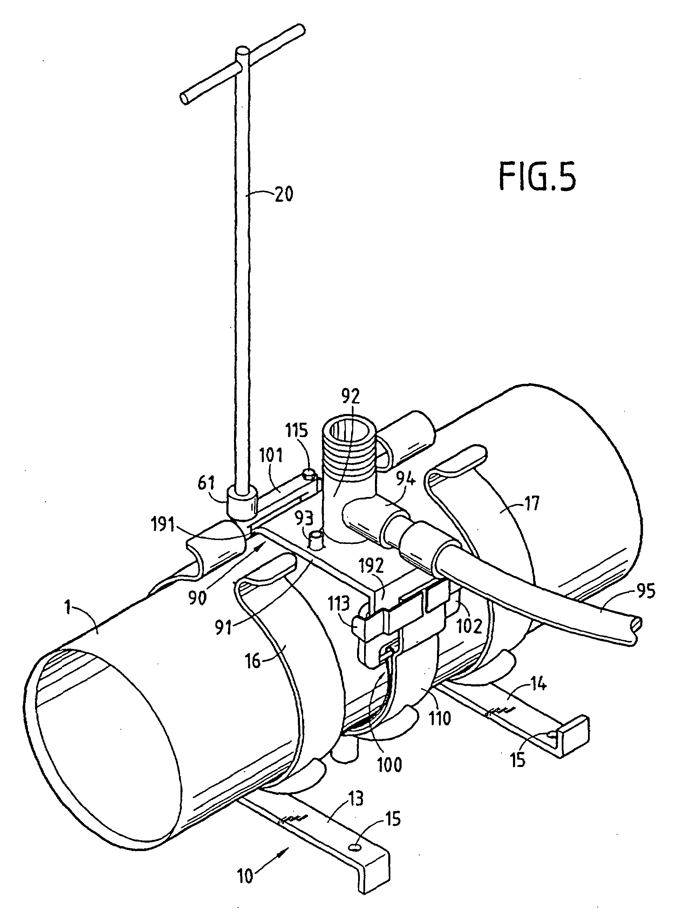

Dans l'exemple considéré (figures 1 à 7), la selle inférieure 100 est souple et comprend une sangle rattachée à deux blocs d'extrémité rigides 101, 102. Le bloc d'extrémité 102 est muni d'une encoche de réception d'une première patte 192 d'une prise de branchement 90 tandis que le bloc d'extrémité 101 définit également une encoche de hauteur variable pour l'introduction d'une deuxième patte 191 de la prise de branchement 90 (figure 4). Des vis 114, 115 permettent d'immobiliser la deuxième patte 191 dans l'espace libre formant l'évidement ménagé sous la pièce rigide 101 constituant un bloc d'extrémité de position réglable (figure 5).

Préalablement à la saisie de la prise de branchement 90, la selle inférieure 100 est montée sur un adaptateur 110 comprenant un corps élastique en forme d'arceau fixé sur une poutrelle 11 d'un bâti. L'adaptateur 110 comprend une languette 113 fixée à une extrémité du corps en forme d'arceau pour recevoir le bloc d'extrémité 102 de la selle inférieure 100 et deux languettes 111, 112 situées à faible distance l'une de l'autre à l'autre extrémité du corps en forme d'arceau pour recevoir les pièces constitutives du bloc d'extrémité 101 de position réglable.

L'adaptateur 110 de selle inférieure est monté en position centrale sur une première face de la poutrelle 11 du positionneur 10 de selle inférieure. Des pinces 16, 17, par exemple en forme de clips, présentant un diamètre adapté à celui de la canalisation 1, sont montées sur la première face de la poutrelle 11, de part et d'autre de l'adaptateur 110. Un dispositif de liaison à vis 12 est disposé en position centrale sur une deuxième face de la poutrelle 11 opposée à la première face.

Le bâti du positionneur 10 comprend, outre le poutrelle principale 11, deux barres transversales 13, 14 fixées sur la poutrelle principale 11 et situées de part et d'autre de l'adaptateur 110. Des orifices 15 sont ménagés au voisinage des extrémités de chacune des barres transversales 13, 14, qui peuvent par exemple être constituées par des pièces plates.

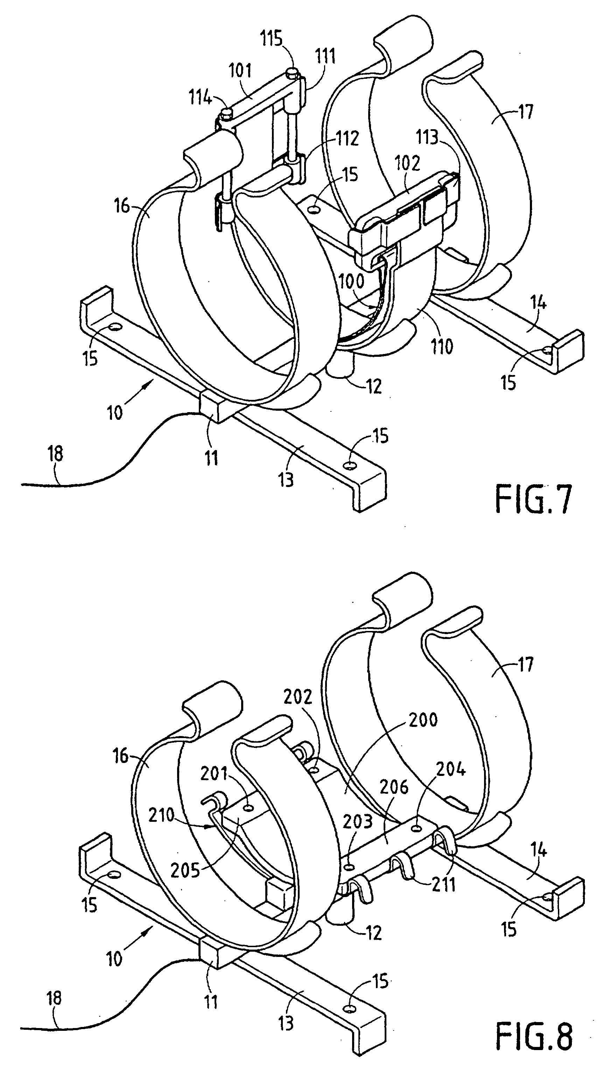

La figure 7 montre l'ensemble du positionneur 10 équipé de la selle inférieure 100 du type à sangle.

La figure 1 montre le positionneur 10 de la figure 7, équipé de la selle inférieure 100, fixé par son dispositif de liaison à vis 12 sur l'embout d'extrémité d'une canne universelle de manoeuvre 20 qui permet de descendre le positionneur 10 jusqu'au niveau de la canalisation 1, la poutrelle principale 11 étant disposée longitudinalement selon l'axe de la canalisation 1.

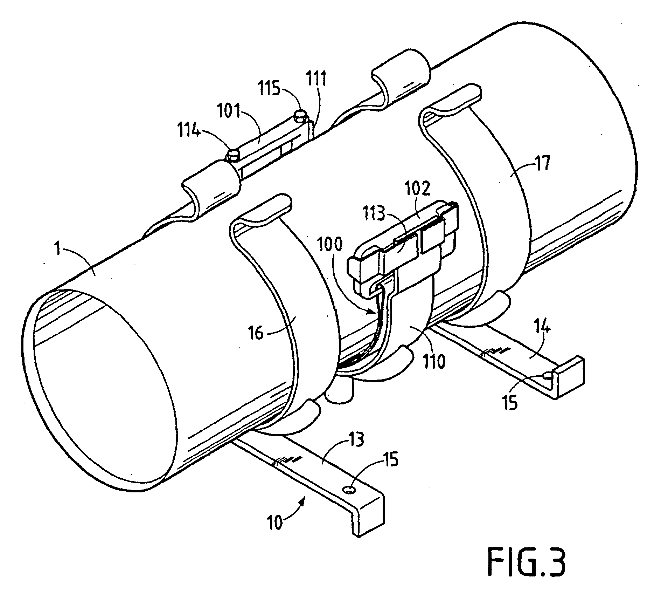

La figure 2 montre une étape qui suit celle de la figure 1. Après qu'une pression a été exercée manuellement vers le bas à l'aide de la canne de manoeuvre 20, les pinces 16, 17 se sont ouvertes et sont venues s'encastrer autour de la canalisation 1 de telle sorte que le positionneur 10 est ainsi monté sur la canalisation 1, la selle inférieure 100 maintenue par son adaptateur 110 étant alors plaquée également contre la canalisation 1. La canne de manoeuvre 20 est alors désolidarisée du dispositif de liaison à vis 12 et est utilisée pour exercer un effort vers le bas sur une extrémité de l'une des barres transversales 13, 14 de manière à provoquer un retournement de l'ensemble du positionneur 10 qui, après avoir pivoté de 180°, se retrouve dans la position de la figure 3. Dans cette position, la selle inférieure 100 est correctement placée en contact avec la partie inférieure de la canalisation 1.

La figure 4 illustre une étape suivante au cours de laquelle une prise de branchement 90 comportant une plaque de base 91, un fût central 92, des plots de soudage 93, un manchon de dérivation 94 associé à un tube de dérivation 95, et des pattes d'extrémité 191, 192, est montée par son fût 92 sur un embout porte-prise 30 de la canne de manoeuvre 20 et descendue jusqu'au niveau de la canalisation 1. Une patte d'extrémité 192 de la prise de branchement 90 est engagée dans un évidement du bloc d'extrémité 102 de la selle inférieure 100 tandis que l'autre patte d'extrémité 191 est engagée dans l'évidement de dimensions réglables situé sous le bloc d'extrémité 101 de la selle inférieure 100.

La canne de manoeuvre 20 peut alors être retirée du fût 92 et servir, grâce à un embout tournevis 61 raccordé à l'extrémité de la canne, à visser les vis de fixation 114, 115, de manière à emprisonner la patte d'extrémité 191 de la prise 90 sous le bloc 101 de la selle inférieure 100 (figure 5).

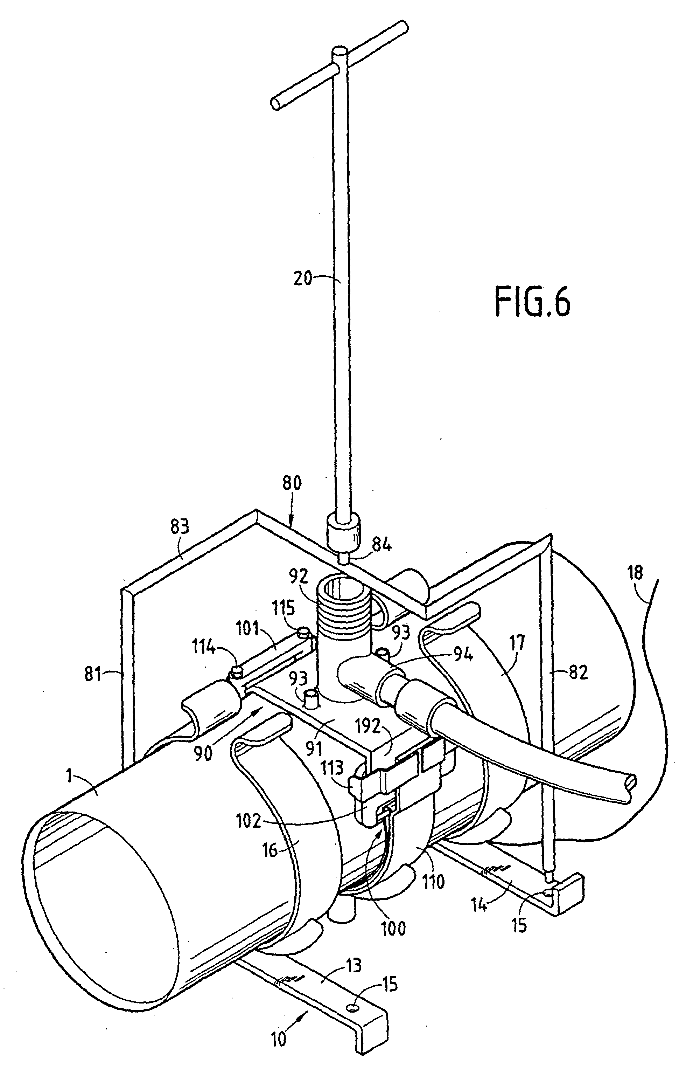

L'étape suivante, illustrée sur la figure 6, consiste à récupérer le positionneur 10 tout en laissant en place la prise de branchement 90 maintenue serrée de façon autonome autour de la canalisation 1, grâce à la selle inférieure 100. Pour cela, on utilise un outil de déconnexion 80 qui comprend deux tiges verticales 81, 82 déportées reliées par des branches horizontales 83 à un embout central 84 de liaison à l'embout d'extrémité de la canne de manoeuvre 20. Grâce à un effort exercé manuellement vers le bas sur la canne de manoeuvre 20, des efforts vers le bas sont exercés par les tiges verticales 81, 82 sur les barres transversales 13, 14 de part et d'autre de la canalisation 1. Les tiges verticales 81, 82 sont avantageusement munies de parties terminales de dimension réduite qui viennent juste s'engager dans les orifices 15 ménagés dans les barres transversales 13, 14. On est ainsi sûr que l'outil de déconnexion 80 est bien positionné par rapport aux barres transversales 13, 14. On pourrait envisager un outil de déconnexion 80 composé de quatre tiges verticales agissant sur chacune des barres 13, 14 de part et d'autre de la canalisation, mais il est en pratique suffisant d'utiliser deux tiges verticales 81,82 agissant sur chacune des barres transversales 13, 14 et permettant, lorsque l'on appuie sur la canne de manoeuvre 20, une déconnexion des pinces 16, 17 qui libèrent le positionneur 10 par rapport à la canalisation 1 et l'ensemble prise 90-selle inférieure 100. Un câble 18 relié au positionneur 10 et s'étendant jusqu'à l'extérieur du puits de fouille permet de retirer facilement le positionneur 10. Un dispositif de type pince pourrait jouer le même rôle.

Une fois retiré, le positionneur peut être immédiatement réutilisé pour la pose d'une autre prise de branchement. L'utilisation du même outillage peut être répétée avec une grande fréquence, indépendamment des opérations de soudage proprement dit de la prise qui s'effectuent après le retrait du positionneur 10.

Une fois le positionneur 10 retiré du puits de fouille, la prise de branchement 90 est maintenue en place sur la canalisation 1 par la selle inférieure 100 dans des conditions prédéterminées et standardisées.

L'opération de soudage de la prise 90 sur la canalisation 1 peut être effectuée de façon classique par l'application d'un courant électrique sur les plots de soudage 93 reliés à une résistance électrique incorporée dans la prise, par exemple de la manière décrite dans le document FR-A-2 714 710. De même, les opérations de perforation de la canalisation à travers le fût 92 de la prise 90 et de vissage d'un bouchon sur ce fût 92 après perforation de la canalisation peuvent être effectuées au moyen d'un perforateur et d'un organe porte-bouchon de vissage montés sur l'embout de la canne de manoeuvre 20 d'une façon classique qui peut également correspondre par exemple à celle indiquée dans le document FR-A-2 714 710.

La description qui précède a été effectuée en référence à un exemple particulier de selle inférieure 100 comprenant une sangle souple sur laquelle la prise de branchement 90 est accrochée puis immobilisée en position finale grâce au serrage des vis de fixation 114, 115. L'invention s'applique cependant à des prises de branchement 90 coopérant avec des selles inférieures 100, 200, 300 de diverses configurations. Dans ce cas, l'adaptateur de selle 110, 210, 310 présente une forme adaptée à la selle inférieure 100, 200, 300, mais le reste du positionneur 10 peut être semblable à ce qui vient d'être décrit.

La figure 8 montre un exemple de selle inférieure 200 rigide comprenant une partie centrale en forme de berceau prolongée par deux brides latérales horizontales 205, 206 munies de perforations 201 à 204. L'adaptateur 210 de selle inférieure comprend un ensemble de lamelles flexibles 211 fixées sur la poutrelle centrale 11 du positionneur 10.

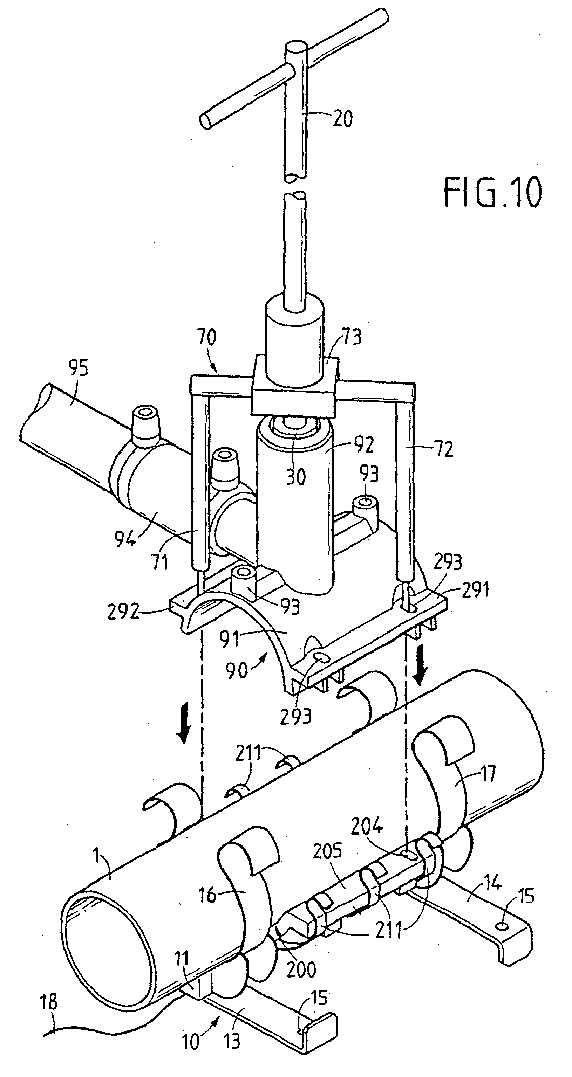

La figure 10 montre une prise de branchement 90 adaptée à la selle inférieure 200 de la figure 8 et comportant deux brides latérales 291, 292 munies de perforations 293 qui correspondent aux perforations 201 à 204 de la selle inférieure 200.

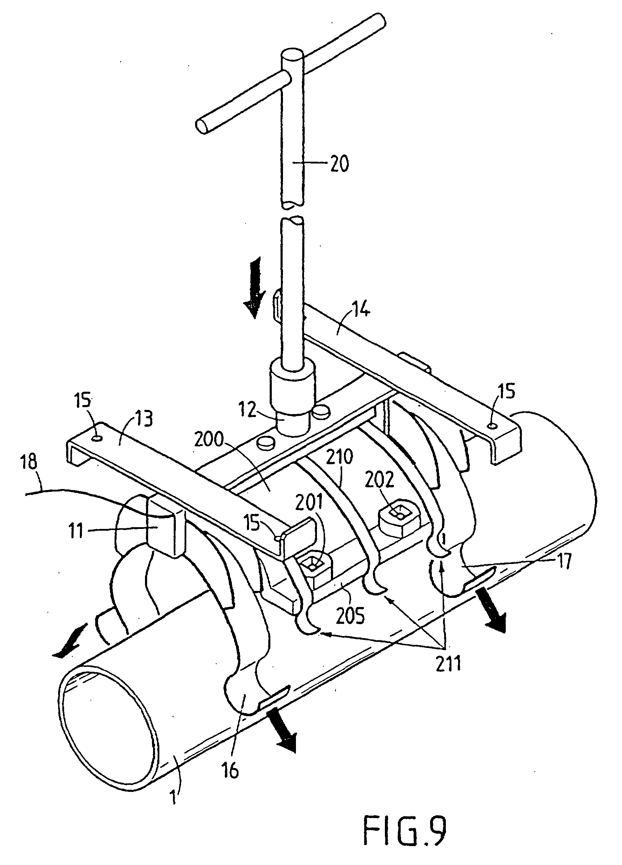

La mise en place de la selle inférieure rigide 200 s'effectue selon le même principe que celle de la selle inférieure souple 100. On met d'abord en place la selle inférieure 200 sur le positionneur 10 muni de son adaptateur 210, on descend le positionneur 10 sur la canalisation 1 (figure 9), et on procède à une rotation de 180° du positionneur 10 pour placer la selle 200 sous la canalisation 1 dans la position de la figure 10. Un embout fileté 30 placé à la partie inférieure de la canne 20 permet de fixer la prise 90 sur la canne 20 et de descendre la prise 90 au niveau de la canalisation 1. Comme représenté sur la figure 10, l'embout fileté 30 peut être associé à des moyens de positionnement 70 supplémentaires fixés par un bloc 73 à l'embout fileté 30.

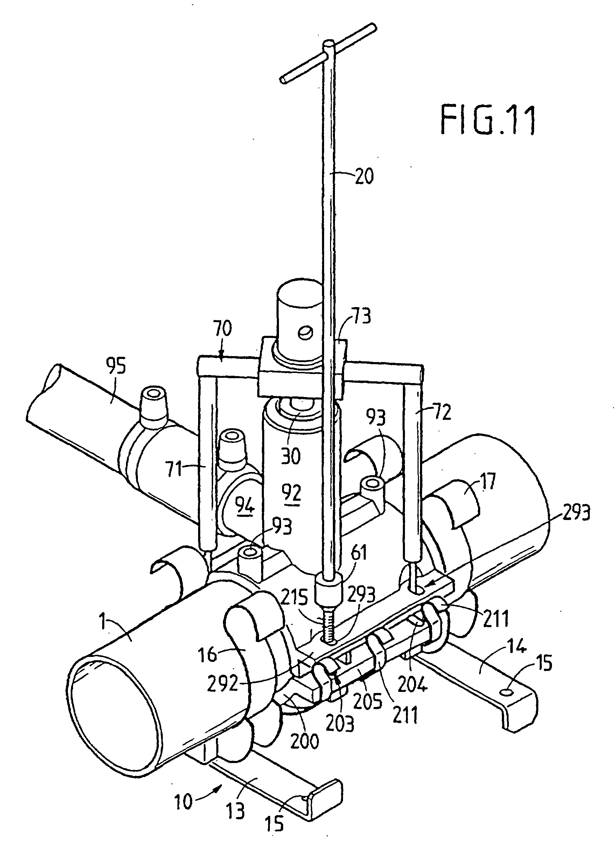

Ces moyens de positionnement 70 comprennent deux tiges 71, 72 de centrage qui passent par deux trous 293 de fixation de la prise 90 et deux des trous 201 à 204 de la salle inférieure 200, ce qui permet un centrage parfait des trous les uns par rapport aux autres et facilite la mise en place de vis 215 depuis le haut du puits de fouille, dans les trous restant libres, à l'aide d'un outil tournevis comprenant un embout 61 à l'extrémité inférieure d'une canne de manoeuvre (figure 11). L'opération de retrait du positionneur 10 peut s'effectuer à l'aide d'un outil 80 semblable à celui représenté sur la figure 6 et selon le processus décrit en référence à cette figure 6. Les opérations suivantes de soudage de la prise 90 sur la canalisation 1, de perçage de la canalisation et de mise en place d'un bouchon sur le fût 92 de la prise 90 sont classiques comme indiqué plus haut en référence au premier mode de réalisation de l'invention.

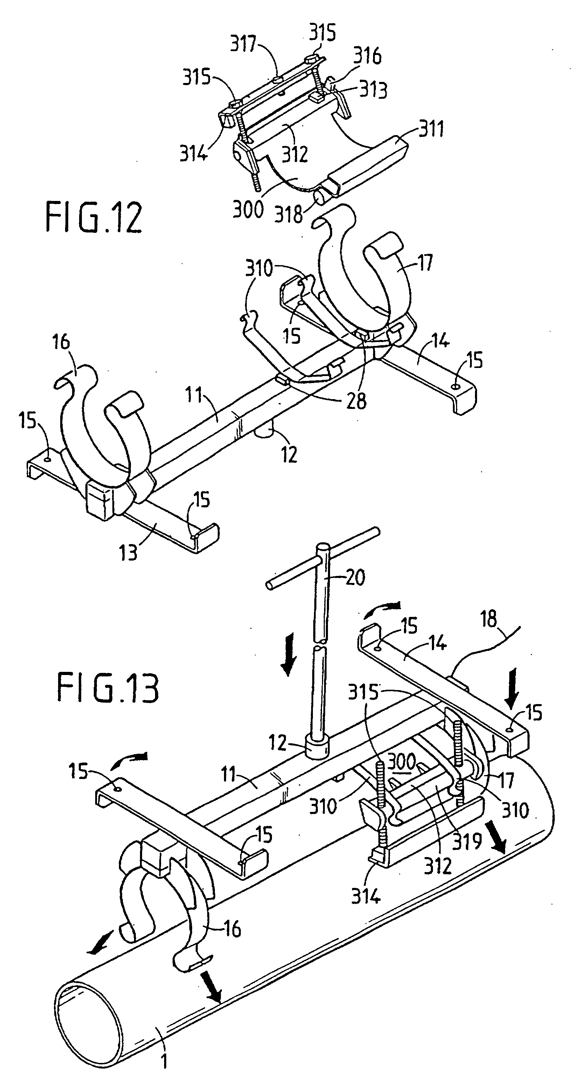

Les figures 12 à 17 illustrent un autre mode de réalisation selon lequel une prise de branchement 90 pouvant être assez semblable à celle de la figure 10, avec des brides latérales de fixation 391, 392 qui sont cependant entièrement plates et n'ont pas besoin d'être percées, coopère avec une selle inférieure 300 du type à glissières, dont la position axiale sur le positionneur 10 peut être définie par des butées 28. La selle inférieure 300 comprend, de part et d'autre d'une partie centrale en forme de berceau reliée par un adaptateur 310, constitué de lamelles élastiques, à la poutrelle 11 d'un positionneur 10, une glissière fixe 311 pour recevoir la première bride 391 de la prise 90 et une glissière rabattable 312, 314 dont une partie 314 peut basculer et venir se rabattre contre une butée d'encastrement 313 pour recouvrir la deuxième bride 392 de la prise de branchement 90.

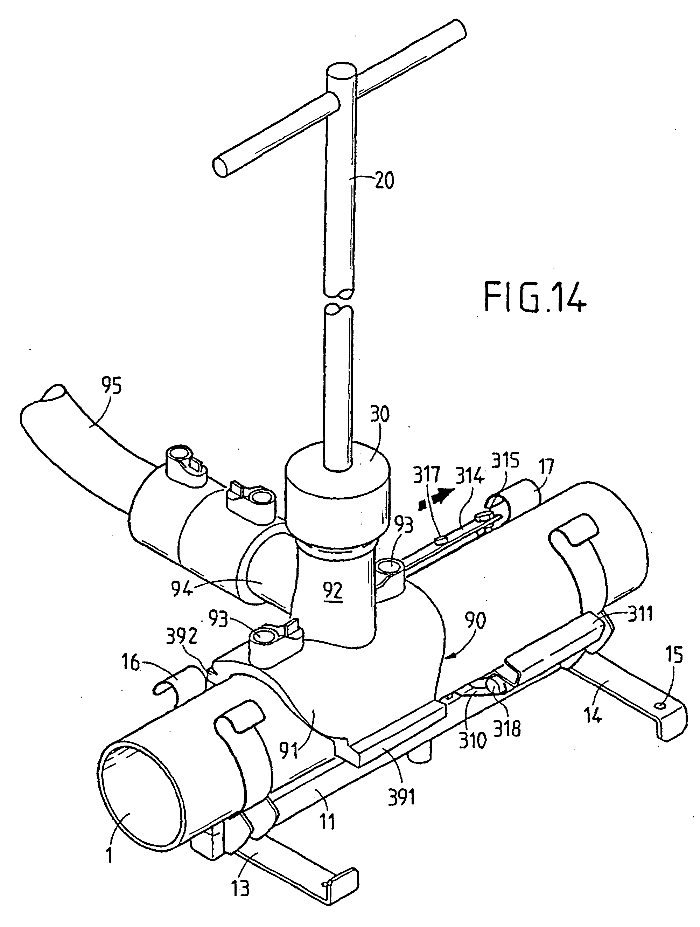

Comme on peut le voir sur la figure 12, le positionneur 10 peut être semblable au positionneur 10 déjà décrit plus haut et présente un bâti avec une poutrelle longitudinale 11 et deux barres transversales 13, 14 munies d'orifices ou trous borgnes 15, ainsi que deux pinces 16, 17 adaptées au diamètre de la canalisation, et un moyen 12 de raccordement à une canne de manoeuvre 20. Le processus de mise en place de la prise 90 est toutefois légèrement différent dans la mesure où la liaison entre la selle inférieure 300 et la prise de branchement 90 est effectuée par glissement axial de la prise 90 (dont la position initiale est représentée sur la figure 14) vers la selle 300.

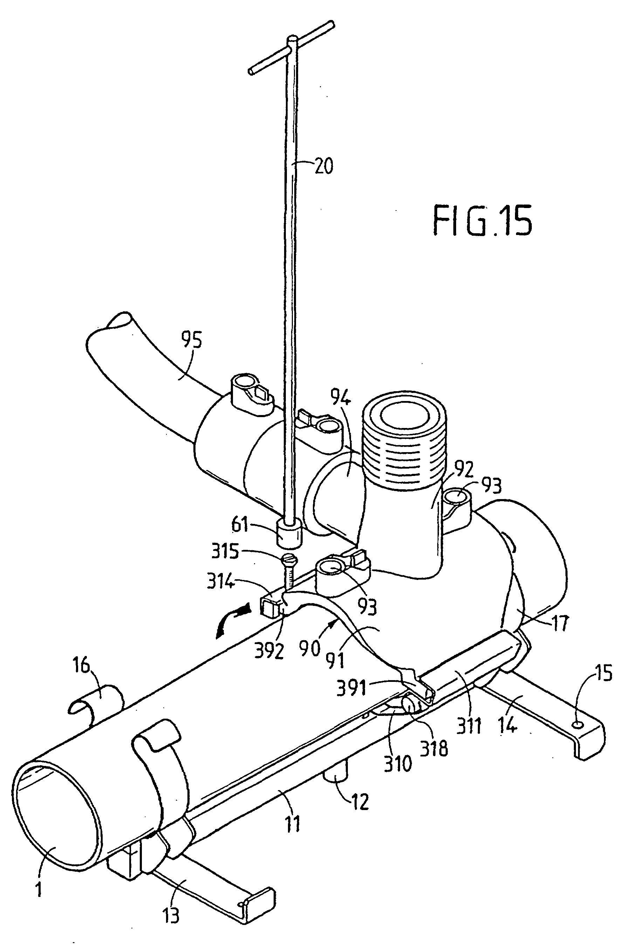

Le procédé de montage selon le mode de réalisation des figures 12 à 17 est le suivant : on fixe d'abord le positionneur 10 muni de ses pinces ou clips 16, 17 et de la selle inférieure 300, illustrés sur la figure 12, sur la canalisation 1 (figure 13). On retourne de 180° le positionneur qui prend la position représentée sur la figure 14. On fait descendre à l'aide de la canne de manoeuvre 20 la prise de branchement 90 dans la position représentée sur la figure 14, la glissière 314 étant ouverte. On fait glisser la prise 90 dans la glissière fixe 311 (ou l'inverse), comme représenté sur la figure 15. On rabat la partie 314 de la glissière mobile 312, 314 et les vis 315 au moyen d'une tige de vissage fixée à la canne de manoeuvre 20, jusqu'à ce que les vis 315 viennent en butée contre la butée 313 solidaire de la partie 312 (figures 12 et 14) et on procède au vissage des deux vis 315 pour obtenir le serrage adéquat, une butée 316 (figure 12) permettant de limiter le serrage. La butée de serrage 313 peut être adaptée au type de prise.

Comme on peut le voir sur la figure 12, un élément 317 disposé sur la partie rabattable 314 de la glissière mobile 312, 314 constitue un organe de centrage pour la prise 90.

Les figures 13 à 16 montrent par ailleurs que les lamelles élastiques de l'adaptateur 310 peuvent venir s'engager sur des pièces 318, 319, par exemple cylindriques, disposées sous la glissière fixe 311 et la partie fixe 312 de la glissière mobile 312, 314.

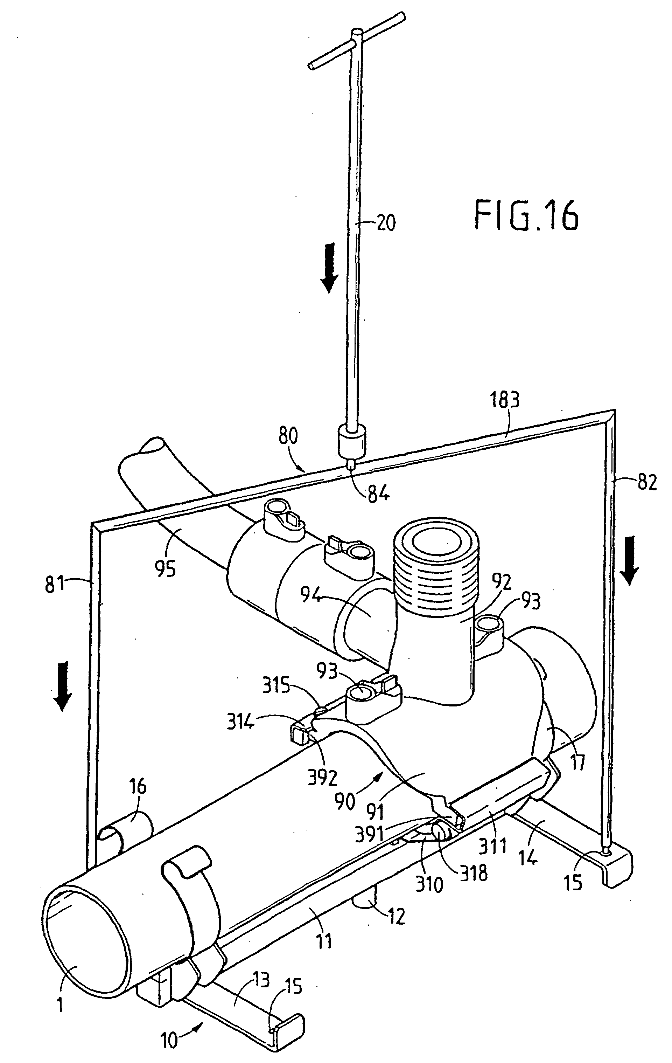

La figure 16 montre une étape de retrait du positionneur 10 à l'aide d'un outil 80 semblable à celui représenté sur la figure 6, mais avec une tige horizontale 183 de liaison entre les branches verticales 81, 82, qui peut être rectiligne. Le positionneur 10 est déconnecté par un effort vertical exercé vers le bas par la canne 20 sur l'outil 80 en prise par ses bras verticaux 81, 82 sur les barres transversales 13, 14 du positionneur 10.

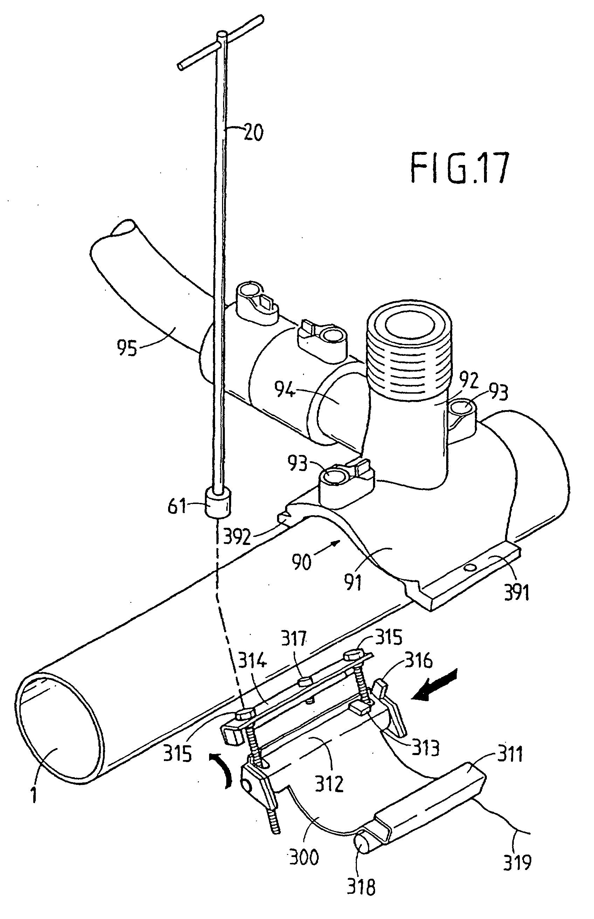

La selle inférieure 300 reste en place pendant le soudage de la prise 90 sur la canalisation 1, et le temps du refroidissement, puis peut être démontée par simple desserrage des vis 315 à l'aide de la canne 20 munie d'un embout visseur 61. La partie rabattable 314 de la glissière mobile 312, 314 peut alors s'ouvrir, ce qui permet à la selle inférieure 300 de pouvoir être dégagée des brides 391, 392 de la prise 90, par coulissement le long de l'axe de la canalisation 1 (figure 17). La selle inférieure 300 peut alors être récupérée, par exemple à l'aide d'un outil à pinces, ou à l'aide d'un câble 319 attaché dès l'origine à la selle inférieure 300.

## Revendications

1. Procédé de mise en place d'une prise de branchement (90) sur une canalisation enterrée (1) de transport d'un fluide, depuis le haut d'un puits de fouille, la prise de branchement (90) et la canalisation enterrée (1) étant en matériau thermofusible, **caractérisé en ce qu'**il comprend les étapes suivantes :
a) réaliser un puits de fouille de taille réduite de manière à dégager tout le pourtour du tronçon de canalisation (1) sur lequel doit être installée la prise de branchement (90),
b) installer une selle inférieure (100; 200 ; 300) séparable de la prise de branchement (90) sur un adaptateur de selle inférieure (110 ; 210 ; 310) lui-même monté sur un positionneur (10) de selle inférieure muni de pinces (16, 17) adaptées au diamètre de la canalisation (1),
c) descendre le positionneur (10) de selle inférieure dans le puits de fouille au moyen d'une canne universelle (20) en prise avec le positionneur (10),
d) monter à l'aide des pinces (16, 17) le positionneur (10) de selle inférieure sur le tronçon de canalisation (1) dégagé,
e) désolidariser la canne universelle (20) du positionneur (10) et appuyer sur le positionneur (10) de selle inférieure pour faire tourner ce dernier autour de la canalisation (1) jusqu'à ce que la selle inférieure (100 ; 200 ; 300) soit positionnée sous la canalisation (1),
f) monter le fût de la prise de branchement (90) à l'extrémité de la canne universelle (20) et descendre la prise de branchement (90) jusqu'au niveau de la canalisation (1),
g) mettre en place et fixer la prise de branchement (90) sur la selle inférieure (100 ; 200 300) à l'aide d'un embout tournevis (60) fixé à l'extrémité de la canne universelle (20),
h) déconnecter à l'aide d'un outil à bras monté sur la canne universelle (20) le positionneur de selle inférieure (10) en laissant en place la selle inférieure (100 ; 200 ; 300),
i) remonter le positionneur (10) de selle inférieure hors du puits de fouille, et
j) procéder aux opérations de soudage de la prise de branchement (90), de perçage de la prise de branchement (90) et de mise en place d'un bouchon sur le fût de la prise (90).

2. Dispositif de mise en place d'une prise de branchement (90) sur une canalisation enterrée (1) de transport d'un fluide, depuis le haut d'un puits de fouille, à l'aide d'une canne universelle (20), la prise de branchement (90) et la canalisation enterrée (1) étant en matériau thermofusible, **caractérisé en ce qu'**il comprend un positionneur (10) de selle inférieure comportant un bâti (11) sur lequel sont disposés, d'une part, des moyens de liaison par pincement (16, 17) adaptés au diamètre de la canalisation (1) et un adaptateur (110; 210 ; 310) de support de la selle inférieure (100; 200 ; 300) et, d'autre part, un moyen (12) de fixation amovible à l'extrémité de la canne universelle (20), situé du côté opposé aux moyens de liaison par pincement par rapport au bâti (11), et des moyens amovibles adaptables à l'extrémité de la canne universelle (20) pour mettre en place la prise de branchement (90) sur la canalisation (1) au-dessus de la selle inférieure (100; 200 ; 300), effectuer une liaison mécanique entre la prise de branchement (90) et la selle inférieure (100; 200 ; 300), déconnecter de la canalisation (1) le positionneur (10) de selle inférieure, et assurer les opérations de soudage de la prise de branchement (90) sur la canalisation (1), de perçage du fût (92) de la prise de branchement (90) et de mise en place d'un bouchon sur ledit fût (92).

3. Dispositif selon la revendication 2, **caractérisé en ce que** le bâti (11) du positionneur (10) de selle inférieure comprend une barre principale (11) destinée à être placée parallèlement au tronçon de canalisation (1) et deux barres transversales (13, 14) fixées sur la barre principale (11) et situées de part et d'autre de l'adaptateur de selle inférieure (110 ; 210 ; 310) et du moyen (12) de fixation amovible à l'extrémité de la canne universelle (20).

4. Dispositif selon la revendication 3, **caractérisé en ce que** les moyens amovibles de déconnexion du positionneur (10) de selle inférieure par rapport à la canalisation (1) comprennent au moins deux tiges verticales (81, 82) reliées à un embout (84) de fixation à l'extrémité de la canne universelle (20) pour prendre appui chacune respectivement sur des extrémités des barres transversales (13, 14) situées de part et d'autre de la canalisation (1).

5. Dispositif selon l'une quelconque des revendications 2 à 4, **caractérisé en ce que** l'adaptateur (110) de selle inférieure (100) du type à sangle comprend un corps en forme d'arceau fixé sur le bâti (11) du positionneur (10) de selle inférieure du côté des moyens de liaison par pinces (16, 17) et des languettes élastiques (111 ; 112 ; 113) fixées aux extrémités dudit corps en forme d'arceau.

6. Dispositif selon l'une quelconque des revendications 2 à 4, **caractérisé en ce que** l'adaptateur (210) de selle inférieure (200) du type rigide à vis comprend un ensemble de lamelles flexibles (211) fixées sur le bâti (11) du positionneur (10) de selle inférieure du côté des moyens de liaison par pinces (16, 17).

7. Dispositif selon l'une quelconque des revendications 2 à 4, **caractérisé en ce que** l'adaptateur (310) de selle inférieure (300) du type à glissière comprend des moyens de fixation amovible de la selle inférieure (300) sur le bâti (11) du positionneur (10) de selle inférieure du côté des moyens de liaison par pinces (16, 17).

8. Dispositif selon l'une quelconque des revendications 2 à 7, **caractérisé en ce que** les moyens amovibles pour effectuer une liaison mécanique entre la prise de branchement (90) et la selle inférieure (100; 200 ; 300) comprennent des moyens de vissage reliés à un embout (61) de fixation à l'extrémité de la canne universelle (20).

9. Dispositif selon la revendication 7, **caractérisé en ce que** la selle inférieure (300) du type à glissière comprend de part et d'autre d'une partie centrale une glissière fixe (311) pour recevoir une première bride (391) de la prise de branchement (90) et une glissière rabattable (312, 314) dont une partie (314) peut basculer et venir se rabattre contre une butée (313) pour recouvrir une deuxième bride (392) de la prise de branchement (90).

10. Dispositif selon la revendication 6 et la revendication 8, **caractérisé en ce que** la selle inférieure (200) du type à vis comprend de part et d'autre d'une partie centrale en forme de berceau des brides horizontales (205, 206) percées de trous (201 à 204) de passage de vis, et **en ce que** les moyens amovibles pour effectuer une liaison mécanique entre la prise de branchement (90) et la selle inférieure (200) comprennent en outre des moyens de positionnement (70) reliés à un embout (73) de fixation à l'extrémité de la canne universelle (20) et comportant deux tiges (71, 72) de maintien en position des pénétrations dans deux des trous de passage de vis (213 ; 201 à 204) ménagés dans la prise de branchement (90) et dans la selle inférieure (200) pour assurer un maintien en position de la prise de branchement (90) par rapport à la selle inférieure (200) pendant le début de l'opération de vissage dans des trous de passage de vis laissés libres.

## Claims

1. Method for fitting a tapping (90) on a buried pipe (1) for transporting a fluid, from the top of a trench, the tapping (90) and the buried pipe (1) being made of hot-melt material, **characterized in that** it comprises the following steps:
a) making a small-trench so as to uncover the entire periphery of the length of pipe (1) into which the tapping (90) is to be made,
b) installing a bottom saddle (100; 200; 300) detachable from the tapping (90) on a bottom saddle adapter (110; 210; 310) itself mounted on a bottom-saddle positioner (10) fitted with clips (16, 17) tailored to the diameter of the pipe (1),
c) lowering the bottom-saddle positioner (10) into the trench by means of a universal rod (20) engaged with the positioner (10),
d) using the clips (16, 17) to mount the bottom-saddle positioner (10) on the uncovered length of pipe (1),
e) detaching the universal rod (20) from the positioner (10) and pressing on the bottom-saddle positioner (10) to cause the latter to rotate about the pipe (1) until the bottom saddle (100; 200; 300) is positioned under the pipe (1),
f) mounting the barrel of the tapping (90) at the end of the universal rod (20) and lowering the tapping (90) down to level with the pipe (1),
g) fitting and fixing the tapping (90) to the bottom saddle (100; 200; 300) using a screwdriver adapter (60) fixed to the end of the universal rod (20),
h) using a tool fitted with an arm mounted on the universal rod (20) to disconnect the bottom-saddle positioner (10), leaving the bottom saddle (100; 200; 300) in place,
i) raising the bottom-saddle positioner (10) back up out of the trench, and
j) carrying out the operations of welding the tapping (90), piercing the tapping (90) and fitting a cap onto the barrel of the tapping (90).

2. Device for fitting a tapping (90) on a buried pipe (1) for transporting a fluid, from the top of a trench, using a universal rod (20), the tapping (90) and the buried pipe (1) being made of hot-melt material, **characterized in that** it comprises a bottom-saddle positioner (10) comprising a frame (11) on which there are arranged, on the one hand, means of connection by clipping (16, 17), tailored to the diameter of the pipe (1), and an adapter (110; 210; 310) for supporting the bottom saddle (100; 200; 300) and, on the other hand, a means (12) for removable attachment to the end of the universal rod (20), this means being situated on the opposite side to the means of connection by clipping with respect to the frame (11), and removable means that can be fitted to the end of the universal rod (20) for fitting the tapping (90) on the pipe (1) above the bottom saddle (100; 200; 300), making a mechanical connection between the tapping (90) and the bottom saddle (100; 200; 300), disconnecting the bottom-saddle positioner (10) from the pipe (1) and carrying out the operations of welding the tapping (90) to the pipe (1), of piercing the barrel (92) of the tapping (90) and of fitting a plug on the said barrel (92).

3. Device according to Claim 2, **characterized in that** the frame (11) of the bottom-saddle positioner (10) comprises a main bar (11) intended to be placed parallel to the length of pipe (1) and two crossbars (13, 14) fixed to the main bar (11) and situated one on each side of the bottom saddle adapter (110; 210; 310) and of the means (12) of removable attachment to the end of the universal rod (20).

4. Device according to Claim 3, **characterized in that** the removable means of disconnecting the bottom-saddle positioner (10) from the pipe (1) comprise at least two vertical rods (81, 82) connected to an adapter (84) for fixing to the end of the universal rod (20) so as each to bear on a respective end of the crossbars (13, 14) situated on each side of the pipe (1).

5. Device according to any one of Claims 2 to 4, **characterized in that** the bottom saddle (100) adapter (110), of the strap type, comprises a hoop-shaped body fixed to the frame (11) of the bottom-saddle positioner (10) on the side of the means of connection by clips (16, 17) and elastic tabs (111; 112; 113) fixed to the ends of the said hoop-shaped body.

6. Device according to any one of Claims 2 to 4, **characterized in that** the bottom saddle (200) adapter (210) of rigid screw type comprises a set of flexible leads (211) fixed to the frame (11) of the bottom-saddle positioner (10) on the side of the means of connection by clips (16, 17).

7. Device according to any one of Claims 2 to 4, **characterized in that** the bottom saddle (300) adapter (310) of the slide type comprises means of removable attachment of the bottom saddle (300) to the frame (11) of the bottom-saddle positioner (10) on the side of the means of connection by clips (16, 17).

8. Device according to any one of Claims 2 to 7, **characterized in that** the removable means for making mechanical connection between the tapping (90) and the bottom saddle (100; 200; 300) comprise screw means connected to an adapter (61) for fixing to the end of the universal rod (20).

9. Device according to Claim 7, **characterized in that** the bottom saddle (300) of slide type comprises, on each side of a central part, a fixed slide (311) for receiving a first flange (391) of the tapping (90) and a knock-down slide (312, 314) part (314) of which can be tilted and knocked down against a stop (313) to cover a second flange (392) of the tapping (90).

10. Device according to Claim 6 and Claim 8, **characterized in that** the bottom saddle (200) of the screw type comprises, on each side of a central part in the form of a cradle, horizontal flanges (205, 206) pierced with screw holes (201 to 204), and **in that** the removable means for making a mechanical connection between the tapping (90) and the bottom saddle (200) further comprise positioning means (70) connected to an adapter (73) for fixing to the end of the universal rod (20) and comprising two rods (71, 72) for holding penetrations in position in two of the screw holes (213; 201 to 204) made in the tapping (90) and in the bottom saddle (200) so as to hold the tapping (90) in position with respect to the bottom saddle (200) during the start of the operation of screwing screws into the screw holes left free.

## Patentansprüche

1. Verfahren zum Einbauen eines Abzweigstücks (90) in einer unterirdischen Fluid-Leitung (1) ausgehend vom Obergrund einer Baugrube aus, wobei das Abzweigstück (90) und die unterirdische Leitung (1) aus wärmeschmelzbarem Material bestehen, **dadurch gekennzeichnet, dass** es folgende Schritte umfasst:
a) Herstellen einer Baugrube von reduzierter Größe, indem man den gesamten Umfang des Teilstücks der Leitung (1) freilegt, in das das Abzweigstück (90) eingebaut werden soll,
b) Installieren eines von dem Abzweigstück (90) abtrennbaren unteren Lagerbockes (100; 200; 300) auf einem Adapter (110; 210; 310) für den unteren Lagerbock, der selbst auf einem Positionierstück (10) für den unteren Lagerbock montiert ist, das mit Klammern (16, 17) bestückt ist, die an den Durchmesser der Leitung (1) angepasst sind,
c) Absenken des Positionierstücks (10) für den unteren Lagerbock in die Baugrube mithilfe eines Universalhebers (20), der an dem Positionierstück angreift,
d) Anbringen des Positionierstücks (10) für den unteren Lagerbock auf dem freigelegten Abschnitt der Leitung (1) mithilfe der Klammern (16, 17),
e) Lösen des Universalhebers (20) von dem Positionierstück und Ausüben von Druck auf das Positionierstück, um dieses um die Leitung (1) herumzudrehen, bis der untere Lagerbock (100; 200; 300) unterhalb der Leitung (1) positioniert ist,
f) Anbringen des Schafts des Abzweigstücks (90) am Ende des Universalhebers (20) und Absenken des Abzweigstücks (90) auf die Höhe der Leitung (1),
g) Anbringen und Befestigen des Abzweigstücks (90) auf dem unteren Lagerbock (100; 200; 300) mithilfe eines am Ende des Universalhebers befestigten Schraubendreher-Ansatzes (60),
h) Ablösen des Positionierstücks (10) für den unteren Lagerbock mithilfe eines an dem Universalheber (20) befestigten Hebelwerkzeugs unter Belassen des unteren Lagerbocks (100; 200; 300) an seinem Platz,
i) Herausheben des Positionierstücks (10) für den unteren Lagerbock aus der Baugrube und
j) Ausführen der Arbeiten zum Schweißen des Abzweigstücks (90), zum Bohren des Abzweigstücks (90) und zum Anbringen eines Stopfens auf dem Schaft des Stücks (90).

2. Vorrichtung zum Anbringen eines Abzweigstücks (90) in einer unterirdischen Fluid-Leitung (1) vom Obergrund einer Baugrube aus mithilfe eines Universalhebers (20), wobei das Abzweigstück (90) und die unterirdische Leitung (1) aus wärmeschmelzbarem Material bestehen, **dadurch gekennzeichnet, dass** sie ein Positionierstück (10) für einen unteren Lagerbock umfasst, das ein Tragelement (11) hat, auf dem angeordnet sind einerseits Klammer-Verbindungsmittel (16, 17), welche an den Durchmesser der Leitung angepasst sind, und ein Adapter (110; 210; 310) zum Stützen des unteren Lagerbocks (100; 200; 300), und andererseits ein abnehmbares Befestigungsmittel (12) am Ende des Universalhebers (20) auf der den Klammer-Verbindungsmitteln bezüglich des Tragelements (11) gegenüberliegenden Seite, und abnehmbare, an das Ende des Universalhebers (20) ansetzbare Mittel zum Anbringen des Abzweigstücks (90) an der Leitung (1) über dem unteren Lagerbock (100; 200; 300), zum Bewirken einer mechanischen Verbindung zwischen dem Abzweigstück (90) und dem unteren Lagerbock (100; 200; 300), zum Ablösen des Positionierstücks (10) für den unteren Lagerbock von der Leitung (1), und zum Ausführen der Arbeiten zum Anschweißen des Abzweigstücks (90) an die Leitung (1), zum Bohren des Schaftes (92) des Abzweigstücks (90) und zum Anbringen eines Stopfens auf dem besagten Schaft (92).

3. Vorrichtung nach Anspruch 2, **dadurch gekennzeichnet, dass** das Tragelement (11) des Positionierstücks (10) für den unteren Lagerbock einen parallel zu dem Abschnitt der Leitung (1) anzuordnenden Hauptstab (11) und zwei Querstäbe (13, 14) umfasst, die am Hauptstab (11) befestigt und beidseits des Adapters (110; 210; 310) für den unteren Lagerbock und des abnehmbaren Befestigungsmittels (12) am Ende des Universalhebers (20) angeordnet sind.

4. Vorrichtung nach Anspruch 3, **dadurch gekennzeichnet, dass** die abnehmbaren Mittel zum Lösen des Positionierstücks (10) des unteren Lagerbocks von der Leitung (1) mindestens zwei vertikale Stangen (81, 82) umfassen, die mit einem Befestigungsansatz (84) am Ende des Universalhebers (20) verbunden sind, um sich jeweils auf beidseits der Leitung liegenden Enden der Querstäbe (13, 14) abzustützen.

5. Vorrichtung nach einem der Ansprüche 2 bis 4, **dadurch gekennzeichnet, dass** der Adapter (110) des unteren, gurtartigen Lagerbocks (100) einen Körper in Form eines an dem Tragelement (11) des Positionierstücks (10) des unteren Lagerbocks neben den Klammer-Verbindungsmitteln (16, 17) befestigten Bügels sowie an den Enden des besagten bügelförmigen Körpers befestigte elastische Laschen (111; 112; 113) umfasst.

6. Vorrichtung nach einem der Ansprüche 2 bis 4, **dadurch gekennzeichnet, dass** der Adapter (210) des unteren, fest verschraubbaren Lagerbocks eine Anzahl flexibler Lamellen (211) umfasst, die neben den Klammer-Verbindungsmitteln (16, 17) an dem Tragelement (11) des Positionierstücks (10) des unteren Lagerbocks befestigt sind.

7. Vorrichtung nach einem der Ansprüche 2 bis 4, **dadurch gekennzeichnet, dass** der Adapter (310) des unteren Gleit-Lagerbocks (300) abnehmbare Mittel zum Befestigen des.unteren Lagerbocks (300) neben den Klammer-Verbindungsmitteln (16, 17) auf dem Tragelement (11) des Positionierstücks (10) für den unteren Lagerbock umfasst.

8. Vorrichtung nach einem der Ansprüche 2 bis 7, **dadurch gekennzeichnet, dass** die abnehmbaren Mittel zum Herstellen einer mechanischen Verbindung zwischen dem Abzweigstück (90) und dem unteren Lagerbock (100; 200; 300) Mittel zum Verschrauben umfassen, die mit einem Befestigungsansatz (61) am Ende des Universalhebers (20) verbunden sind.

9. Vorrichtung nach Anspruch 7, **dadurch gekennzeichnet, dass** der untere Gleit-Lagerbock beidseits eines mittleren Teils eine feste Gleitschiene (311) zum Aufnehmen einer ersten Schulter (391) des Abzweigstücks (90) und eine abklappbare Gleitschiene (312, 314) umfasst, von der ein Abschnitt (314) kippen und gegen einen Anschlag (313) zur Anlage klappen kann, um eine zweite Schulter (392) des Abzweigstücks zu überdecken.

10. Vorrichtung nach Anspruch 6 und nach Anspruch 8, **dadurch gekennzeichnet, dass** der verschraubbare untere Lagerbock beidseits eines mittleren muldenförmigen Abschnitts horizontale, von Löchern (201 bis 204) zum Durchführen von Schrauben durchdrungene Schultern (205, 206) umfasst, und dass die abnehmbaren Mittel zum Herstellen einer mechanischen Verbindung zwischen dem Abzweigstück (90) und dem unteren Lagerbock (200) außerdem Positioniermittel umfassen, die mit einem Befestigungsansatz (73) am Ende des Universalhebers (20) verbunden sind, und die zwei Stangen (71, 72) zum Halten von Einsätzen in Position in zweien der Löcher (213; 201 bis 204) zum Durchführen von Schrauben umfassen, die in das Abzweigstück (90) und in den unteren Lagerbock (200) eingeformt sind, um das Halten des Abzweigstücks (90) in Position bezüglich des unteren Lagerbocks (200) während des Beginns des Verschraubungsvorgangs in den freibleibenden Schrauben-Durchführungslöchern zu gewährleisten.
